# EUROPÄISCHE PATENTANMELDUNG

(11) **EP 4 382 316 A1**
(43) Veröffentlichungstag der Anmeldung: **12.06.2024**
(21) Anmeldenummer: 23211737.4
(22) Anmeldetag: 23.11.2023
(51) Int. Cl.: B60C 11/00, B60C 19/08

(54) **NACHHALTIGKEITSMARKIERUNG AUF FAHRZEUGREIFEN**

(30) Priorität: 07.12.2022 DE 102022213220
(71) Anmelder: Continental Reifen Deutschland GmbH, 30175 Hannover (DE)
(72) Erfinder: Pfaff, Florian, 30165 Hannover (DE); Torbrügge, Stefan, 30165 Hannover (DE); Bargmann, Ralf, 30165 Hannover (DE)
(74) Vertreter: Continental Corporation

(57) **Zusammenfassung**

Die vorliegende Offenbarung betrifft einen Fahrzeugreifen (1), umfassend einen Laufstreifen (10), welcher eine Oberplatte (11) mit einer Oberseite (111) und einer Unterseite (112) aufweist, wobei die Oberplatte (11) ausgebildet ist, um mit der Oberseite (111) in direktem Kontakt mit einer Fahrbahn zu stehen. Weiterhin weist der Laufstreifen (10) eine Unterplatte (12) mit einer Oberseite (121) und einer Unterseite (122) auf, wobei die Oberseite (121) der Unterplatte (12) mit der Unterseite (112) der Oberplatte (11) gekoppelt ist, und zwei Seitenteile (13), welche jeweils an einer gemeinsamen Seite, welche die Oberplatte (11) und die Unterplatte (12) bilden, mit der Oberplatte (11) und der Unterplatte (12) gekoppelt sind. Der Fahrzeugreifen (1) umfasst weiterhin mindestens eine Nachhaltigkeitsmarkierung (20), wobei die Nachhaltigkeitsmarkierung (20) Informationen über den Anteil nachhaltiger Prozesse oder Bestandteile des Fahrzeugreifens (1) umfasst.

## Beschreibung

Die vorliegende Offenbarung betrifft einen Fahrzeugreifen mit einer Nachhaltigkeitsmarkierung. Die vorliegende Offenbarung betrifft ferner ein Verfahren zur Herstellung einer Nachhaltigkeitsmarkierung auf einem Fahrzeugreifen.

Die Nachfrage nach nachhaltigen Produkten nimmt stetig zu. So auch im Bereich von Fahrzeugen und insbesondere im Bereich Fahrzeugreifen. Die resultierenden nachhaltigen Technologien und Prozesse werden primär aus dem Geschäft mit der Originalausstattung angefordert. Eine zunehmende Nachfrage an nachhaltigen Fahrzeugreifen ist auch aus dem Ersatzreifengeschäft zu erwarten.

Es ist wünschenswert einen nachhaltigen Fahrzeugreifen zu schaffen, welcher dauerhaft direkt und unmittelbar als solcher zu erkennen ist. Des Weiteren ist es wünschenswert einen nachhaltigen Fahrzeugreifen zu schaffen mit dem sich ein Kunde identifiziert.

Diese Aufgaben werden durch einen Fahrzeugreifen gemäß Anspruch 1, sowie durch das Verfahren zur Herstellung eines Fahrzeugreifens gemäß Anspruch 10 gelöst.

Weitere Ausgestaltungen sind in den abhängigen Ansprüchen angegeben.

Fahrzeugreifen hergestellt mit nachhaltigen Technologien, Zertifizierungen oder Recyclinganteilen sind für den Kunden und andere Personen nach dem Kauf mittels der Nachhaltigkeitsmarkierung erkennbar. Entsprechend kann sich ein Kunde mit seinem nachhaltigen Produkt wertschätzen lassen. Oder ein Kunde wird als eine Person erkannt, welche höhere Produktkosten zum Wohle der Umwelt akzeptiert.

Reifenkennzeichen befinden sich bei Fahrzeugreifen im Allgemeinen im Seitenbereich des Fahrzeugreifens und dienen in erster Linie der Verbraucherinformation. Eine Reifenkennzeichnung umfasst unter anderem den Geschwindigkeitsindex, die Marke, die Reifengröße und das Herstellungsdatum (DOT-Nummer). Andere Kennzeichen weisen auf den Hersteller oder zusätzliche Informationen hin. Kennzeichen im Seitenbereich unterliegen in der Regel keiner Abnutzung, sodass diese über die gesamte Lebensdauer eines Fahrzeugreifens für den Verbraucher sichtbar sind.

Kennzeichnungen im Seitenbereich z.B. an den Seitenwänden werden in den Formen einer Vulkanisierpresse während des Herstellungsprozesses des Fahrzeugreifens aufgebracht.

Ein nachträgliches Aufbringen einer Kennzeichnung ist ebenfalls möglich indem z.B. mittels eines Lasers eine Kennzeichnung in die Seitenwand eingraviert wird. Somit ist es möglich unterschiedliche Kennzeichnungen nachzuahmen.

So können diese Kennzeichnungen für den Verbraucher keine verlässliche Information bieten, ob der Fahrzeugreifen tatsächlich aus einem nachhaltigen Material besteht.

Gemäß einer Ausführungsform umfasst ein Fahrzeugreifen, einen Laufstreifen, welcher eine Oberplatte mit einer Oberseite und einer Unterseite aufweist. Die Oberplatte ist dazu ausgebildet, um mit der Oberseite in direktem Kontakt mit einer Fahrbahn zu stehen. Der Laufstreifen weist weiterhin eine Unterplatte mit einer Oberseite und einer Unterseite auf, wobei die Oberseite der Unterplatte mit der Unterseite der Oberplatte gekoppelt ist. Der Laufstreifen weist zudem zwei Seitenteile auf, welche jeweils an einer gemeinsamen Seite, welche die Oberplatte und die Unterplatte bilden, mit der Oberplatte und Unterplatte gekoppelt sind.

Die Komponenten werden z.B. in einer Multiplex-Spritzmaschine koextrudiert und liegen als nicht zerstörungsfrei trennbares Halbzeug vor. Der Laufstreifen weist weiterhin mindestens eine Nachhaltigkeitsmarkierung auf, wobei die Nachhaltigkeitsmarkierung Informationen umfasst über den Anteil nachhaltiger Prozesse oder Bestandteile des Fahrzeugreifens.

Die Nachhaltigkeitsmarkierung ist beispielsweise eine Markierung, welche dem Fahrzeugreifen an bestimmten Positionen hinzugefügt wird, um eine Information über die Nachhaltigkeit des Fahrzeugreifens sichtbar zu machen. Dies betrifft beispielsweise eine Nachhaltigkeit der Herstellung und/oder eine Nachhaltigkeit während des Betriebs und/oder eine Nachhaltigkeit beim Recycling. Die Nachhaltigkeitsmarkierung gibt das Maß an, wie nachhaltig ein Fahrzeugreifen ist. Entsprechend einer Klassifizierung über den Anteil der verwendeten nachhaltigen Prozesse oder Bestandteile des Fahrzeugreifens kann der Laufstreifen mit einem, zwei, drei oder mehr z.B. grünen Streifen entlang des Umfangs des Fahrzeugreifens markiert werden. So weist ein Fahrzeugreifen, welcher z.B. zu einem ersten definierten Anteil aus nachhaltigem Material besteht, einen Streifen auf. Ein Fahrzeugreifen, welcher z.B. zu einem zweiten definierten Anteil aus einem nachhaltigen Material besteht, welcher größer als der erste definierte Anteil ist, weist zwei Streifen auf. Je größer der Anteil an nachhaltigen Materialien im Fahrzeugreifen ist, desto mehr Streifen weist ein Fahrzugreifen auf.

Die Anzahl der Streifen gibt z.B. auch an, ob ein nachhaltiges Herstellungsverfahren für den Fahrzeugreifen verwendet wurde. Auch eine Kombination aus z.B. nachhaltigen Materialien und nachhaltigen Herstellungsverfahren wird über die Anzahl der Streifen sichtbar gemacht.

Gemäß einer weiteren Ausführungsform des Fahrzeugreifens umfasst die Unterplatte einen so genannten Carbon Center Beam (abgekürzt: CCB), welcher auch als Mittelbalken bezeichnet wird und Kohlenstoff umfasst. Der Carbon Center Beam ist elektrisch leitfähig und verläuft von der Unterseite der Unterplatte bis zur Oberseite der Oberplatte, so dass der Carbon Center Beam (dt. Mittelbalken) in direktem Kontakt mit der Fahrbahn steht.

Die Unterplatte kann alternativ ebenfalls elektrisch leitfähig sein.

Der Einsatz rollwiderstandsarmer Gummimischungen für Fahrzeugreifen führt in der Regel zu einer Erhöhung des elektrischen Widerstandes dieser Gummimischungen, so dass die elektrische Leitfähigkeit sinkt. Eine ausreichende elektrische Leitfähigkeit des Fahrzeugreifens zur Ableitung von elektrostatischer Ladung von der Felge zur Fahrbahn muss jedoch sichergestellt sein.

Der Carbon Center Beam wird mittels eines so genannten CCB-Extruders hergestellt. Die Positionierung des so genannten Carbon Center Beams wird durch eine Vor- und Endschablone definiert und ist daher nahezu frei wählbar.

Gemäß einer weiteren Ausführungsform des Fahrzeugreifens ist in den Carbon Center Beam die mindestens eine Nachhaltigkeitsmarkierung integriert.

Der CCB-Extruder ist technisch üblicherweise ein kleiner Extruder und stellt somit eine kostengünstige Realisierbarkeit der Nachhaltigkeitsmarkierung dar.

Die Integration der Nachhaltigkeitsmarkierung in den Carbon Center Beam ermöglicht eine simple Herstellung der Nachhaltigkeitsmarkierung. Die Nachhaltigkeitsmarkierung wird in ein bestehendes und bewährtes Herstellungsverfahren eines Fahrzeugreifens integriert. Somit muss das Herstellungsverfahren des Fahrzeugreifens nicht in aufwendiger Weise verändert werden.

Gemäß einer weiteren Ausführungsform des Fahrzeugreifens verläuft die Nachhaltigkeitsmarkierung von der Oberseite der Oberplatte bis zur Unterseite der Unterplatte durch den Laufstreifen hindurch.

Auf diese Weise bleibt die Nachhaltigkeitsmarkierung auch bei hoher Abnutzung des Fahrzeugreifens erhalten und erkennbar.

Die Nachhaltigkeitsmarkierung ist nicht beschränkt auf die Position des CCBs. Unabhängig vom CCB kann die Nachhaltigkeitsmarkierung irgendwo auf dem Laufstreifen aufgebracht werden. Hierzu kann ebenfalls der CCB-Extruder verwendet werden, ohne dass z.B. ein leitfähiger Bereich hergestellt wird. Der Bereich kann alternativ auch leitfähig sein.

Gemäß einer weiteren Ausführungsform des Fahrzeugreifens verläuft die Nachhaltigkeitsmarkierung von der Oberseite der Oberplatte bis zur Unterseite der Oberplatte durch die Oberplatte hindurch.

Die Nachhaltigkeitsmarkierung muss nicht durch den gesamten Laufstreifen hindurch verlaufen. Es reicht aus, wenn die Markierung nur durch die Oberplatte hindurch verläuft. Die Markierung kann beispielsweise vollständig oder teilweise durch die Oberplatte verlaufen.

Auf diese Weise ist z.B. erkennbar, wann die Oberplatte vollständig oder teilweise abgefahren ist.

Zudem ist die Nachhaltigkeitsmarkierung auf dem Fahrzeugreifen auch im Liegen auf der Seitenwand erkennbar, wenn die Fahrzeugreifen z.B. gelagert werden.

Gemäß einer weiteren Ausführungsform des Fahrzeugreifens verläuft die Nachhaltigkeitsmarkierung durch mindestens einen der zwei Seitenteile hindurch.

Vorteilhafterweise verläuft die Nachhaltigkeitsmarkierung durch die Verbindungsstelle zwischen Laufstreifen und Seitenwand hindurch, welche im fertigen Fahrzeugreifen vom Seitenteil gebildet wird. Im Bereich des Seitenteils ist die Nachhaltigkeitsmarkierung somit auch während der Fahrt gut sichtbar.

Gemäß einer weiteren Ausführungsform des Fahrzeugreifens umfasst die Nachhaltigkeitsmarkierung mindestens einen Streifen, welcher entlang des Umfangs des Fahrzeugreifens in Fahrtrichtung auf dem Laufstreifen verläuft.

Die Nachhaltigkeitsmarkierung ist nicht zwangsweise auf nur einen Streifen beschränkt. Denkbar sind auch zwei oder drei oder mehr Markierungen. Diese werden verwendet, um genauere Angaben zu den Reifeneigenschaften zu machen, ohne dass Buchstaben, Zahlen oder andere Schriftzeichen verwendet werden müssen. Dies ermöglicht eine schnellere und einfachere Identifizierung der Materialeigenschaften.

Gemäß einer weiteren Ausführungsform des Fahrzeugreifens ist der mindestens eine Streifen grün. Denkbar sind auch andere Farben, wie z.B. rot, blau oder sonstige Farben. Somit ist auch eine Farbcodierung möglich, um die Fahrzeugreifen zu klassifizieren.

Gemäß einer weiteren Ausführungsform des Fahrzeugreifens ist die Nachhaltigkeitsmarkierung extrudiert.

Durch die Extrusion wird die Nachhaltigkeitsmarkierung nicht nur oberflächlich aufgebracht. Durch die Realisierung in der Extrusion über die gesamte Dicke des Laufstreifens bleibt die Markierung während des gesamten Produktlebenszyklus während der Nutzung sichtbar.

Gemäß einer Ausführungsform umfasst das Verfahren zur Herstellung eines Fahrzeugreifens mit mindestens einer Nachhaltigkeitsmarkierung, die folgenden Schritte.

Der Laufstreifen wird mit einem ersten Extruder extrudiert und die mindestens eine Nachhaltigkeitsmarkierung wird mit einem zweiten Extruder extrudiert.

Der nachhaltige Fahrzeugreifen wird mit einem oder mehreren z.B. grünen Streifen im extrudierten Laufstreifen als ein nachhaltiger Fahrzeugreifen kenntlich gemacht. Hierfür kann z.B. ein dedizierter CCB-Extruder verwendet werden, welcher mit z.B. grüner Mischung gefüttert wird.

Eine Nutzung des CCB-Extruders stellt eine kostengünstige Realisierbarkeit dar.

Der Laufstreifen und die mindestens eine Nachhaltigkeits-markierung werden mittels einer Vorschablone zusammengeführt. Mittels einer Endschablone wird die äußere Geometrie des Laufstreifens vorgegeben.

So werden über ein geeignetes Schablonendesign ein oder mehrere Streifen eingebracht.

Indem die Herstellung der Nachhaltigkeitsmarkierung in einen bestehenden Prozess eingefügt wird, ist kein neuer Prozess nötig, der eine höhere Komplexität mit sich bringen würde.

Entsprechend einer Klassifizierung über den Anteil Nachhaltiger Prozesse oder Bestandteile des Reifens können die Produkte mit einem oder mehr farbigen, z.B. grünen Streifen entlang des Umfangs des Reifens markiert werden.

Kunden können sich so besser mit ihrem nachhaltigen Fahrzugreifen identifizieren und werden über das Produkt als nachhaltige Person identifiziert. Über diese Identifizierung lässt sich z.B. ein höherer Kaufpreis für nachhaltige Produkte im Ersatzreifengeschäft rechtfertigen.

Für Kunden, welche z.B. Neuwagen kaufen und die Originalausstattung bevorzugen, stellt dieser Ansatz eine Möglichkeit dar, nachhaltige Produkte aktiv in den Fokus zu stellen.

Für den Markt mit Originalausstattung können spezielle kundenspezifische Farbcodierungen für Nachhaltigkeitslevel eingeführt bzw. exklusiv vermarktet werden. Aber auch eine Nutzung als Designfeature ohne Verbindung zur Nachhaltigkeit ist möglich.

Mit dem Fahrzeugreifen und dem Verfahren der vorliegenden Offenbarung wird der Erkennungswert an nachhaltigen Produkten gesteigert.

Die Offenbarung betrifft ein Verfahren zum Herstellen eines Fahrzeugreifens mit einer Nachhaltigkeitsmarkierung und einen Fahrzeugreifen mit einer

Nachhaltigkeitsmarkierung. Ein ähnliches Konzept kann jedoch auf jede andere Typisierung eines Fahrzeugreifens angewendet werden, der über spezielle Eigenschaften verfügt.

Eine grüne Markierung oder farbliche Hervorhebung auf der Seitenwand des Fahrzeugreifens ist ebenso möglich.

Die Erfindung wird im Folgenden anhand von Figuren näher erläutert.

Es zeigen:
- Figur 1: eine vereinfachte schematische Darstellung eines Fahrzeugreifens mit verschiedenen Varianten der Nachhaltigkeitsmarkierung,
- Figur 2: eine vereinfachte schematische Darstellung eines Laufstreifens mit verschiedenen Varianten der Nachhaltigkeitsmarkierung.
- Figur 3: ein Flussdiagramm eines Verfahrens zur Herstellung eines Fahrzeugreifens mit einer Nachhaltigkeitsmarkierung.

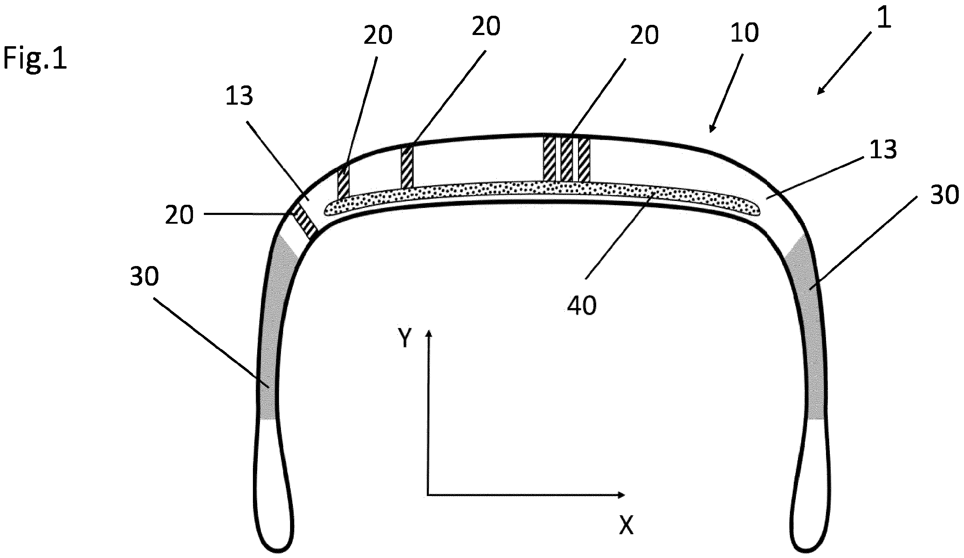

Figur 1 zeigt den Querschnitt eines Fahrzeugreifens 1 in radialer Bauform. Der Schnitt durch den Fahrzeugreifen 1 erfolgt senkrecht zur Fahrtrichtung eines Fahrzeugs.

Der Fahrzeugreifen 1 umfasst einen Laufstreifen 10, zwei Seitenteile 13 und zwei Seitenwände 30, welche aus einer Kautschukmischung hergestellt sind. Jede Seitenwand 30 ist jeweils mit einem der zwei Seitenteile 13 gekoppelt. Die Achse von der einen Seitenwand 30 zu der zweiten Seitenwand 30 definiert dabei eine X-Achse. Senkrecht zur X-Achse steht in der Bildebene eine Y-Achse.

Weiterhin umfasst der Fahrzeugreifen 1 einen Verstärkungsbereich 40, der sich im Wesentlichen entlang der X-Achse erstreckt. Der Verstärkungsbereich 40 umfasst die Kombination aus allen Festigkeitsträgern. Dazu gehören z.B. eine Spulbandage, eine Textilbandage und ein Gürtel, welcher sowohl aus Stahlgürteln und Textilgürteln als auch aus einer Kombination bestehen kann. Auf diese Weise wird der Fahrzeugreifen stabilisiert.

Innerhalb des Laufstreifens 10 sind an verschiedenen Positionen über die Länge des Laufstreifens 10 im Wesentlichen entlang der X-Achse verschiedene Nachhaltigkeitsmarkierungen 20 aufgebracht.

Die Nachhaltigkeitsmarkierungen 20 können einzeln oder in Kombination von zwei, drei oder mehr Streifen, welche sich an unterschiedlichen Stellen des Laufstreifens 10 befinden, aufgebracht werden.

Die Nachhaltigkeitsmarkierung 20 kann ebenfalls an nur einer Position innerhalb des Laufstreifens 10 aufgebracht werden.

Entsprechend einer Klassifizierung über den Anteil Nachhaltiger Prozesse oder Bestandteile des Fahrzeugreifens 1 können die Produkte mit einem oder mehr farbigen, z.B. grünen Streifen entlang des Umfangs des Fahrzeugreifens 1 markiert werden.

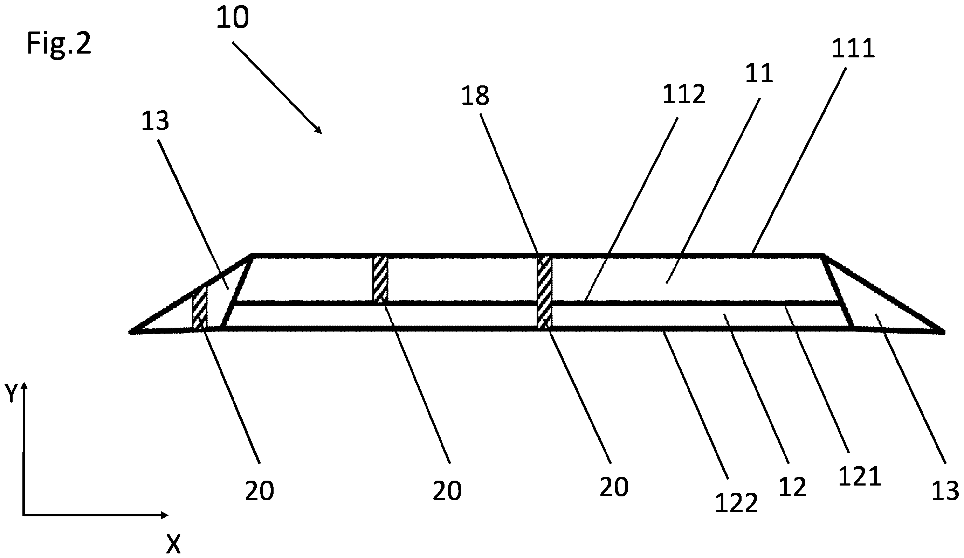

Figur 2 zeigt einen Laufstreifen 10 in ausgerollter Form. Die Länge des Laufstreifens 10 erstreckt sich entlang einer X-Achse. Senkrecht zu der X-Achse steht in der Bildebene eine Y-Achse.

Der Laufstreifen 10 umfasst eine Oberplatte 11 mit einer Oberseite 111 und einer Unterseite 112, wobei die Oberplatte 11 ausgebildet ist, um mit der Oberseite 111 in direktem Kontakt mit einer Fahrbahn zu stehen. Weiterhin umfasst der Laufstreifen eine Unterplatte 12 mit einer Oberseite 121 und einer Unterseite 122, wobei die Oberseite 121 der Unterplatte 12 mit der Unterseite 112 der Oberplatte 11 gekoppelt ist.

Der Laufstreifen 10 umfasst weiterhin zwei Seitenteile 13, welche jeweils an einer gemeinsamen Seite, welche die Oberplatte 11 und die Unterplatte 12 bilden, mit der Oberplatte 11 und der Unterplatte 12 gekoppelt sind.

Des Weiteren umfasst der Laufstreifen 10 die mindestens eine Nachhaltigkeitsmarkierung 20, wobei die Nachhaltigkeitsmarkierung 20 Informationen über den Anteil nachhaltiger Prozesse oder Bestandteile des Fahrzeugreifens 1 umfasst.

Die Nachhaltigkeitsmarkierungen 20 befinden sich an verschiedenen Positionen innerhalb des Laufstreifens 10. Die Nachhaltigkeitsmarkierungen 20 verlaufen durch das Seitenteil 13, nur durch die Oberplatte 11, durch die Oberplatte 11 und die Unterplatte 12 und sind in einen Carbon Center Beam 18 integriert.

Die genannten Positionen der Nachhaltigkeitsmarkierung 20 können einzeln eingenommen werden oder in einer Kombination von mehreren Positionen.

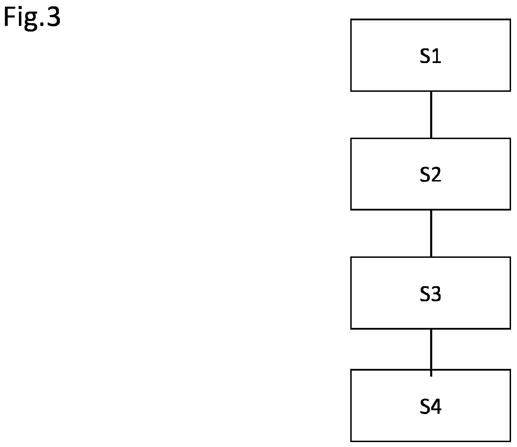

Figur 3 zeigt die Schritte eines Flussdiagrammes zur Herstellung eines Fahrzeugreifens 10 mit einer Nachhaltigkeitsmarkierung 20.

In Schritt S1 wird der Laufstreifen 10 extrudiert.

In Schritt S2 wird die Nachhaltigkeitsmarkierung 20 extrudiert.

In Schritt S3 werden der Laufstreifen 10 und die Nachhaltigkeitsmarkierung 20 mittels einer Vorschablone zusammengeführt.

In Schritt S4 wird die äußere Geometrie des Laufstreifens 10 mittels einer Endschablone vorgegeben.

Die Erfindung ist nicht auf die beschriebenen Ausführungsvarianten beschränkt.

Die Farbgestaltung und Formen können variieren und der Anwendungsbereich kann sich unterscheiden.

### Bezugszeichenliste

- 1: Fahrzeugreifen
- 10: Laufstreifen
- 11: Oberplatte
- 111: Oberseite der Oberplatte
- 112: Unterseite der Oberplatte
- 12: Unterplatte
- 121: Oberseite der Unterplatte
- 122: Unterseite der Unterplatte
- 13: Seitenteil
- 18: Carbon Center Beam (abgekürzt: CCB)
- 20: Nachhaltigkeitsmarkierung
- 30: Seitenwand
- 40: Verstärkungsschicht

## Patentansprüche

1. Fahrzeugreifen (1), umfassend
- einen Laufstreifen (10), welcher aufweist
- eine Oberplatte (11) mit einer Oberseite (111) und einer Unterseite (112), wobei die Oberplatte (11) ausgebildet ist, um mit der Oberseite (111) in direktem Kontakt mit einer Fahrbahn zu stehen,
- eine Unterplatte (12) mit einer Oberseite (121) und einer Unterseite (122), wobei die Oberseite (121) der Unterplatte (12) mit der Unterseite (112) der Oberplatte (11) gekoppelt ist, und
- zwei Seitenteile (13), welche jeweils an einer gemeinsamen Seite, welche die Oberplatte (11) und die Unterplatte (12) bilden, mit der Oberplatte (11) und der Unterplatte (12) gekoppelt sind, und
- mindestens eine Nachhaltigkeitsmarkierung (20), wobei die Nachhaltigkeitsmarkierung (20) Informationen umfasst über den Anteil nachhaltiger Prozesse oder Bestandteile des Fahrzeugreifens (1).

2. Fahrzeugreifen (1) nach Anspruch 1, wobei die Unterplatte (12) umfasst einen Carbon Center Beam (18), welcher elektrisch leitfähig ist, und welcher von der Unterseite (122) der Unterplatte (12) bis zur Oberseite (111) der Oberplatte (11) verläuft, so dass der Carbon Center Beam (18) in direktem Kontakt mit der Fahrbahn steht.

3. Fahrzeugreifen (1) nach Anspruch 1 oder 2, wobei in den Carbon Center Beam (18) die mindestens eine Nachhaltigkeitsmarkierung (20) integriert ist.

4. Fahrzeugreifen (1) nach einem der Ansprüche 1 bis 3, wobei die Nachhaltigkeitsmarkierung (20) von der Oberseite (111) der Oberplatte (11) bis zur Unterseite (122) der Unterplatte (12) durch den Laufstreifen (10) hindurch verläuft.

5. Fahrzeugreifen (1) nach einem der Ansprüche 1 bis 4, wobei die Nachhaltigkeitsmarkierung (20) von der Oberseite (111) der Oberplatte (11) bis zur Unterseite (112) der Oberplatte (12) durch die Oberplatte (11) hindurch verläuft.

6. Fahrzeugreifen (1) nach einem der Ansprüche 1 bis 5, wobei die Nachhaltigkeitsmarkierung (20) durch mindestens einen der zwei Seitenteile (13) hindurch verläuft.

7. Fahrzeugreifen (1) nach einem der Ansprüche 1 bis 6, wobei die Nachhaltigkeitsmarkierung (20) mindestens einen Streifen umfasst, welcher entlang des Umfangs des Fahrzeugreifens (1) in Fahrtrichtung auf dem Laufstreifen (10) verläuft.

8. Fahrzeugreifen (1) nach Anspruch 7, wobei der mindestens eine Streifen grün ist.

9. Fahrzeugreifen (1) nach einem der Ansprüche 1 bis 8, wobei die Nachhaltigkeitsmarkierung (20) extrudiert ist.

10. Verfahren zur Herstellung eines Fahrzeugreifens (1) mit mindestens einer Nachhaltigkeitsmarkierung (20), wobei das Verfahren die Schritte umfasst
- Extrudieren des Laufstreifens (10) mit einem ersten Extruder,
- Extrudieren der mindestens einen Nachhaltigkeitsmarkierung (20) mit einem zweiten Extruder,
- Zusammenführen des Laufstreifens (10) und der Nachhaltigkeitsmarkierung (20) mittels einer Vorschablone und
- Vorgeben der äußeren Geometrie des Laufstreifens (10) mittels einer Endschablone.
